# EUROPEAN PATENT SPECIFICATION

(11) **EP 1 360 540 B1**
(45) Date of publication and mention of the grant of the patent: **25.03.2009**
(21) Application number: 02704677.0
(22) Date of filing: 30.01.2002
(51) Int. Cl.: G02C 5/00, C22F 1/10

(54) **METHOD OF PRODUCING FRAMES FOR GLASSES AND/OR PARTS THEREOF**
VERFAHREN ZUM HERSTELLEN VON FASSUNGEN FÜR BRILLEN UND/ODER TEILE DAFÜR
PROCEDE DE FABRICATION DES MONTURES ET/OU PARTIES DE MONTURES DE LUNETTES

(30) Priority: 02.02.2001 IT MI20010195
(43) Date of publication of application: 12.11.2003
(73) Proprietor: Optigen S.r.l., 20025 Legnano-Milan (IT)
(72) Inventor: ROSSIN, Paolo, I-20025 Legnano-Milan (IT)
(74) Representative: Martegani, Franco
(86) International application number: PCT/EP2002/000959
(87) International publication number: WO 2002/063375

(56) References cited:
- EP-A- 0 477 375
- EP-A- 0 668 523
- WO-A-93/18429
- US-A- 4 896 955
- US-A- 6 077 368
- US-A1- 2001 028 431

## Description

The present invention relates to frames for glasses and/or parts thereof. In particular, these frames for glasses and/or parts thereof are made of shape memory NiTi alloys, suitably processed.

The production of frames for glasses with appropriate elastic materials has already been dealt with by the state of the art and numerous, varying solutions have been found.

The frames, in fact, sold by opticians generally have a standard structure which the optician can subsequently adapt to the facial features of the user with the aim of obtaining a product which is perfectly adapted to said facial characteristics, by means of specific bending operations effected on the frames.

In the production of frames for glasses, stainless steel alloys, for example, or alloys based on copper or nickel-copper or nickel-silver are used. This selection is due to the easy formation and processing of these alloys. A recognized limitation of these alloys, however, lies in their poor elasticity. During normal use, in fact, they can be easily permanently bent causing a distorted geometry of the frames. These permanent deformations also cause general discomfort for the wearer as the weight distribution of the glasses on the face is not uniform, consequently losing the correct distance between lenses and eyes.

In view of these considerations, many articles and patents have proposed the use of shape memory alloys in the production of frames, with greater elasticity. Shape memory alloys, in fact, have the property of tolerating considerable deformations without undergoing permanent plastic deformation. It is stated, for example, that the maximum deformation which can be borne by a shape memory metal or alloy is about ten times greater than that of a traditional metal. This characteristic varies according to the materials and thermo-mechanical processing, but it clearly justifies interest in these materials.

The first patent application for the use of shape memory alloys in frames for glasses goes back to 1979 and since then numerous patent applications have been filed. The reason for this long list of applications lies in the rather complex nature of the mechanism which accounts for the shape memory effect and the pseudoelastic properties of shape memory alloys.

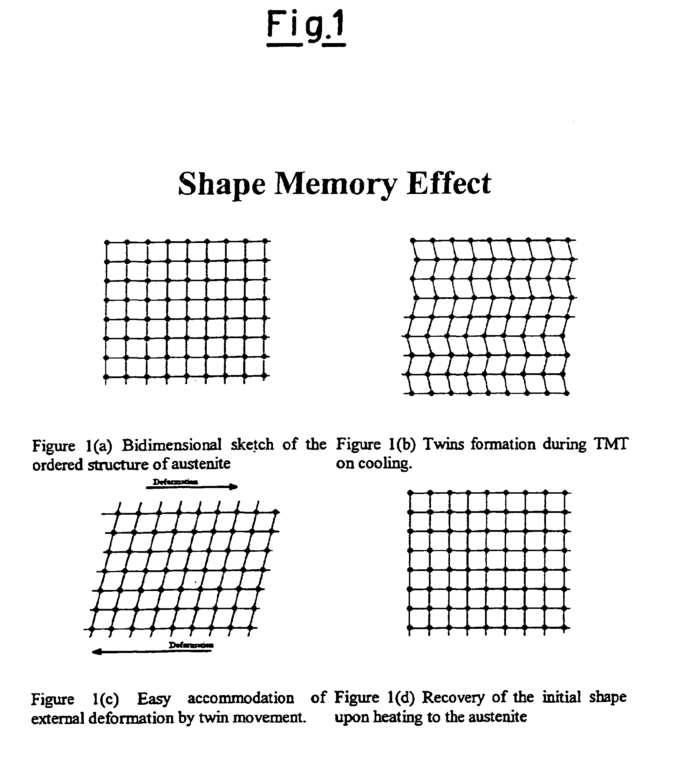

Shape memory alloys are in fact metallic materials in which a phase transformation to the solid state takes place. This transformation is called "thermoelastic martensitic transformation (TMT) and is a thermodynamic transformation of the first order to the solid state, which can be promoted by temperature changes or by the application and removal of a state of mechanical stress (from which the term thermoelastic derives). A TMT transforms a normally ordered crystallographic cubic structure (generally indicated as Austenite) into a crystallographic structure with a lower symmetry, generally indicated as Martensite. It is rather difficult to provide a detailed explanation of the mechanism which gives shape memory alloys their unusual mechanical properties, but simple mention is made and an illustration is provided in Figure 1. When the thermoelastic martensite is formed in a shape memory metal, the crystallographic arrangement of the atoms passes from a cubic ordered structure to a more complex form with many internal interfaces (generally consisting of twinning structures (Figure 1b) which have the characteristic property of moving very easily. When a deformation is imposed on this martensitic structure, the interfaces of the twin planes tend to expand and settle so as to minimize the deformation on a microscopic level (Figure 1(c)). A change in the macroscopic structure takes place without causing any permanent damage to the internal structure. From the material point of view therefore, there is no change on a microscopic level and once the metal is heated again to the austenitic phase, it is capable of quite easily reconstructing the original macroscopic form (Figure 1 (d)). This example describes what is generally called "one-way shape memory effect".

It was previously stated that both the temperature and an external state of stress can equally activate a TMT. If a shape memory metal is subjected to external stress (for example if it is stretched), the martensite begins to form, within a suitable temperature range. The microstructural deformation accommodation mechanism of this martensite induced by stress is completely equivalent to that described above and consequently, once the state of stress is removed, the shape memory metal recovers its initial form. This case evidently illustrates the "pseudoelastic" effect.

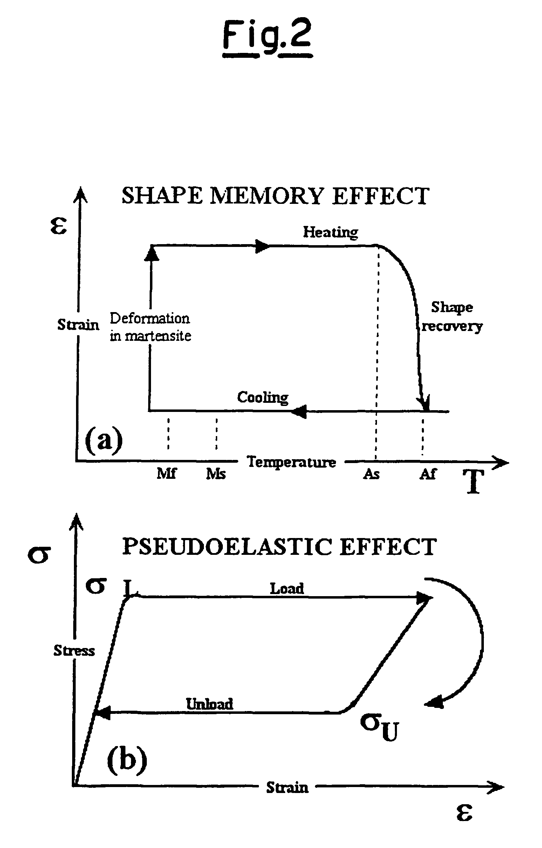

As a result of energy effects and microstructural mechanisms active during the TMT, both the transformation induced by the temperature and that induced by stress show hysteresis. Figure 2 indicates a comparison between two examples of a complete thermodynamic cycle in the deformation-temperature plane (ε, T) (Figure 2a) and in the stress-strain plane (σ, ε) (Figure 2b). These provide experimental evidence of a cycle induced by the temperature (T) and a transformation cycle induced by stress (σ). The two graphs illustrate the shape memory effect and pseudoelastic effect. In Figure 2(a) a shape memory metal is cooled causing TMT. The transformation from austenite to martensite takes place between the starting temperature of the martensite Ms and the final temperature of the martensite Mf. No macroscopic deformation occurs spontaneously during the phase transformation, but the material in the martensite phase is capable of tolerating considerable deformation without microstructural damage.

The deformation is applied to the martensitic phase causing an apparent permanent deformation. When the sample is heated, the transformation from martensite to austenite takes place between the starting temperature of the austenite As and the final temperature of the austenite Af. The sample returns to its initial form within this temperature range.

In figure 2 (b), a shape memory metal is stretched at a constant temperature. This temperature must be within the Af-Md range wherein Af is the final temperature of the austenite defined above, whereas Md is the maximum temperature at which the martensite can be induced by applying stress. As a rule the Af-Md temperature range can generally vary from 10 to 50°C depending on the selection of alloy and processing of the material. On increasing the degree of stress (which, to a certain extent, is the same as reducing the temperature in the previous case), martensite begins to form in the sample. Experimental evidence that a phase transformation is taking place in the material is provided by the section of curve in which the deformation proceeds with constant stress (pseudoelastic plateau) σL (typical loading stress). At the end of the plateau all the material has been transformed into the martensitic phase and is only stable at a certain degree of stress. On removing the stress (unloading) the TMT from martensite to austenite takes place at a lower degree of stress σU (typical unloading stress) again demonstrated by the presence of a plateau in the stress-strain curve.

A proposal has been made to exploit both the shape memory effect and pseudoelastic effect in the production of frames for glasses. In the former case the frames would behave as follows. If the frames are accidentally bent, heating them within the temperature range in which austenite is stable can regenerate their original form. In the latter case, the frames will behave in the same way as elastic frames. If bent, the shape memory metal will accommodate the deformation forming martensite and, when the stress causing the deformation is removed, they will recover their original shape.

For thermodynamic reasons, the temperature range within which the shape memory metal is capable of showing pseudoelastic properties is rather narrow and it was generally considered to be too narrow to allow appropriate use in the production of frames. Patents have been proposed, which have attempted to overcome this limitation.

### Superelasticity and pseudoelasticity.

In the above description "pseudoelasticity" was defined as shape recovery in the case of TMT activated by stress. It can be easily demonstrated however that this term is very often exchanged in literature with the term "superelasticity", in order to emphasize the exceptional degree of elasticity of these materials. The term "pseudoelasticity" should be considered as being more precise from a scientific point of view as it underlines the fact that the mechanism which explains macroscopic elastic behaviour is not the standard elastic mechanism (Hook's law). This is, in fact, a different mechanism correlated to the presence of TMT and consequently macroscopic behaviour should be correctly defined as "pseudoelasticity", and not as normal elasticity.

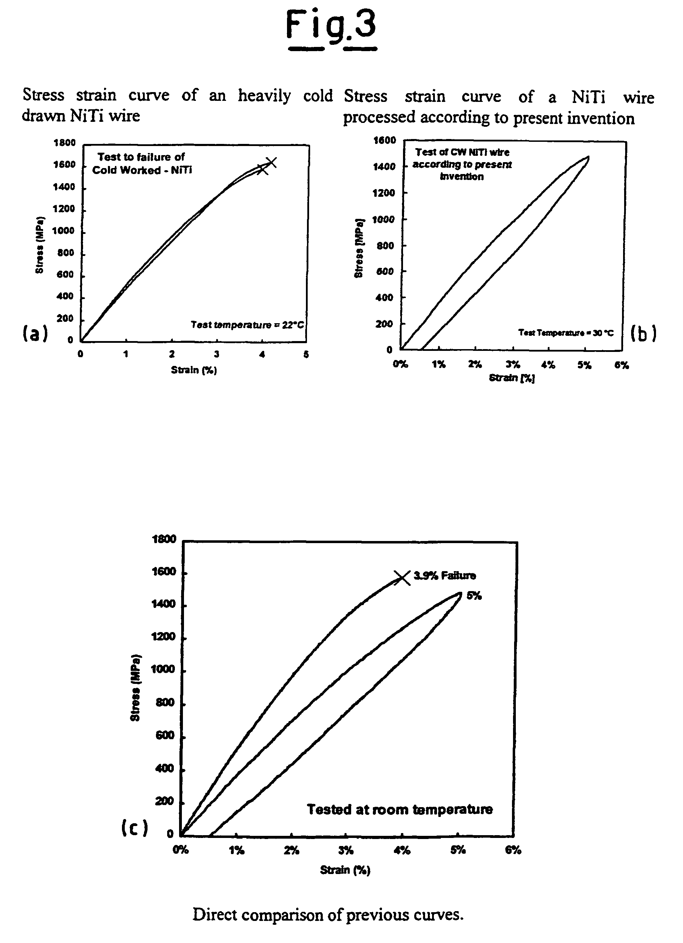

Another factor should also be clarified to be able to fully understand the scope of the present invention. It is known from the state of the art (G.R. Zadno, T.W. Duerig in "Engineering Aspects of Shape Memory Alloys" - Butterworth-Heinemann, 414-419, 1990) that by the drawing of an NiTi alloy, it is possible to obtain improved elastic properties without any martensitic transformation taking place. In this case, the stress-strain property is similar to that indicated in Figure 3(a). There is no sign of a constant pseudoelastic stress plateau and a practically linear deformation occurs. This behaviour, furthermore, only depends on the temperature to a small extent and is not correlated to the degree of strain hardening. In this case this effect is referred to as a superelasticity or linear superelasticity effect. The choice of nomenclature in this case seems more adequate. In this case, in fact, the material behaves like an improved elastic material and there is no trace of a TMT.

Frames for glasses made with shape memory alloys, however, do not enable opticians to effect all necessary adjustments for adapting the frames to the facial features of the wearer owing to their particular nature. Their shape memory, in fact, only allows these frames to be produced in a certain shape and position which are those which have been registered and memorized.

Another method for improving the elastic properties of shape memory alloys and in particular NiTi alloys, was to apply an appropriate combination of strain hardening and thermal treatment to the material in order to increase the [Af, Md] temperature range. This result was obtained by increasing the hardness of the austenitic phase, thus enabling the austenitic phase to resist a higher degree of stress before the activation of permanent deformation mechanisms. The processing of shape memory alloys from this point of view is neither an easy nor obvious task and numerous different approaches have been suggested in patents and articles for controlling the pseudoelastic properties.

Patent EP-A-0310628 describes how to optimize the desired properties within quite a wide temperature range which varies from -20°C to 40°C, which is indicated as optimum. In this case, the use of a combination of pseudoelastic and superelastic properties is suggested. By careful processing of shape memory alloys with an intrinsic pseudoelastic temperature range varying from 10°C to 40°C approximately, it is possible to introduce a low superelasticity level within a lower temperature range (i.e. from -20°C to 10°C). The change in temperature consequently changes the shape recovery mechanism with a general macroscopic behaviour which allows the production of elastic frames for glasses. If the frames were to be subjected to an apparently permanent deformation within the lower temperature range, they could then be rapidly recovered by heating. The transformation properties, in fact, of the alloy would not be removed by the previous processing and would allow recovery of the normal shape. This is demonstrated by the presence of an evident pseudoelastic plateau in the mechanical curves of the alloys processed as described in EP-A-0310628.

The processing of shape memory alloys according to EP-A-0310628 is obviously quite complex as the objective is to obtain an accurate combination of pseudoelasticity and superelasticity. As is evident to all experts in the field, the production of frames for glasses involves numerous plastic deformation passages in order to obtain the end-shape. This makes the application of this state of the art unpractical and difficult to control. For example, each processing step should be taken into account in view of the final strain hardening degree which will remain in the element of the frames.

Other spectacle frames made from NiTi alloy are known from WO93/18429 and EP 668523.

The objective of the present invention is to identify a suitably processed shape memory alloy which overcomes the drawbacks of the known art and in particular to provide shape memory alloys, together with their processing, which reduce the complexity of the production of components for spectacle frames and allow components to be obtained, which are perfectly adaptable to the face of the wearer by means of plastic deformation.

The object of the present invention relates to a method of producing frames for glasses according to claims 1 and 2.

The main advantage of the frames for glasses and/or parts thereof, according to the present invention, is that they have a high degree of elasticity and can be advantageously used within a wide temperature range. At the same time, these frames for glasses and/or parts thereof, according to the present invention, can be plastically deformed so that they can be adapted to the particular facial morphology of all users, a characteristic which is essential for spectacle frames.

The formation procedure described in the present invention allows a material to be obtained, with superelastic properties which can be considered ideal for an economic production of frames for glasses. Furthermore, these frames also have other characteristics such as comfortable use, easy workability after production, sufficient rigidity and resistance to accidental bending.

It is also possible to apply considerable plastic deformation during the production of these frames or parts thereof.

The temperature range from -40°C to 50°C is the normal range used in spectacle frames.

According to claim 1, the titanium content in the NiTi alloy can vary from 48 to 51 atomic percent.

According to claim 2, the NiTi-based alloy is be a ternary modification of NiTi such as NiTiX wherein X is equal to Cu, Fe, Nb, V, Mo, Co, Ta, Cr and Mn. X is preferably equal to Cu, Nb and Fe.

According to claim 2, the percentage of X can vary from 1 to 25 atomic percent.

The components of the frames produced according to the present invention can be bridges, nose pieces and/or temples.

The treatment of the particular choice of alloys according to the present invention, is a modification of the treatment commonly used. Different alloy preparation procedures, in fact, tend to obtain products, in particular NiTi wires, with considerable differences in the end-properties. These properties can be optimized in view of the use of NiTi elements in the production of frames for glasses.

No previous research study has ever provided information on how to give NiTi shape memory alloys superelasticity. It was only known that NiTi drawn wires show a substantial increase in elasticity.

On the other hand, it is known to experts in the field that as NiTi is an intermetallic compound, it is not able to tolerate severe deformations due to the considerable strain hardening process and it is generally difficult to exceed a maximum limit of 45-50% approximately. If this limit were exceeded, the material would break with a fragile fracture process typical of intermetallic compounds.

It is consequently evident that the processing of the material according to the present invention should be carried out taking care to avoid exceeding the maximum workability limit of the alloy. At the same time, a strain hardening degree must be ensured, which allows the thermoelastic martensitic transformation to be completely removed from the alloy.

### EXAMPLES

An example of the procedure for obtaining the material object of the present invention, starts from a conventional NiTi drawn wire, with a strain hardening of not less than 30% approximately. This material has an irregular distribution of the strain hardening degree from the surface to the central part, an irregularity due to the inherent non-homogeneity in the drawing process.

The internal nucleus of the wire has a slightly lower strain hardening degree. It should be pointed out that the strain hardening degree is generally estimated as the percentage reduction of the sample section. It therefore only represents an average estimation of the actual modification induced in the material.

The wire is subsequently subjected to a deformation process capable of redistributing the strain hardening more uniformly by means of suitable mechanical processing, for example by causing heavy, repeated deformations to the material with only slight modifications of the transversal section. A preferred method consists in bending the wire to a value close to the breakage limit and releasing it, this operation being repeated several times, each time twisting the wire back with respect to the main axis.

An alternative method for reaching the same result is to slightly increase the total strain hardening level by means of forging with a rotary swager to increase the total deformation up to a value of at least 35-40%. Another equivalent system, even if slightly less effective, is to cold roll the round section of the wire until a square section having the same area is obtained.

The reason for this equivalence has not yet been completely explained due to difficulties in effecting a complete evaluation of the connections between the microstructural deformations and macroscopic properties of NiTi alloys. In any case, it is believed that the specific texture developed during the drawing process may be conditioned by the subsequent reduction by hammering or rolling which increases the elasticity and ductility properties of the wire.

At the end of the processing according to the present invention, the wire has a more regular distribution of the strain hardening degree. The effect of this process is to obtain a metal which maintains a high strain hardening degree and at the same time has a low modulus of elasticity and an increase in the ultimate elongation.

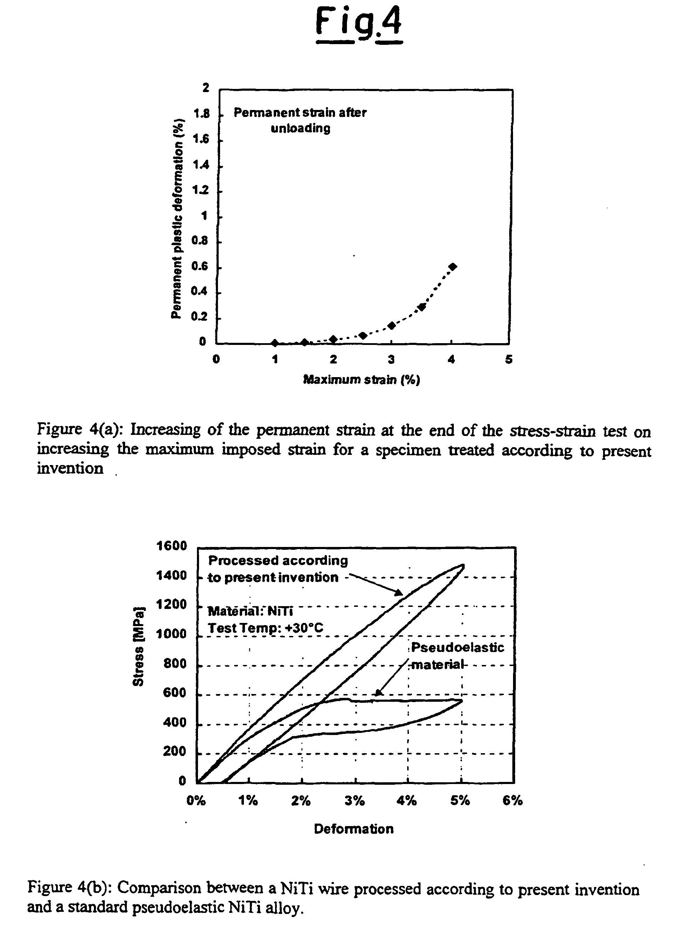

Figure 3 compares the mechanical properties of a drawn NiTi wire and an NiTi wire processed according to the present invention. The curves indicated represent an average between the different samples. The Young modulus of the material changes from about 50-55 GPa to about 35-50 GPa and the alloy can easily reach a 5% deformation. It can be clearly seen from Figure 3 that the elastic recovery of the drawn wire up to 5% is not complete. On effecting successive stress-strain tests, and increasing the maximum deformation, the result indicated in Figure 4 is obtained.

It is evident that the present invention allows a perfect elastic recovery of about 2-2.5% to be obtained, but the permanent deformation is lower than 0.8% even with a maximum deformation of 5%.

Figure 4(b) compares the stress-strain curve of an NiTi wire processed according to the present invention and a standard NiTi pseudoelastic alloy. It is evident that in spite of the decrease in the Young modulus value, the superelastic NiTi in any case has a greater rigidity. Furthermore, after this processing, the wire is capable of tolerating additional severe plastic deformations present in the production of frames for glasses.

The fundamental properties of the NiTi wires subjected to the process according to the present invention were tested and the results are briefly discussed below.

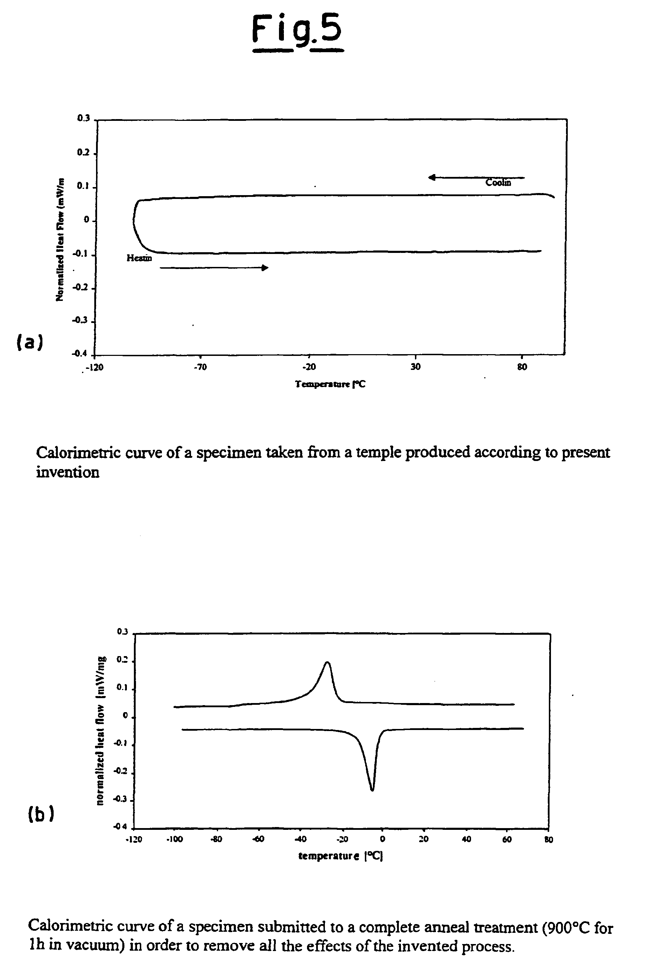

First of all it was verified that TMT had not taken place. This is a key point for avoiding dependency of the mechanical properties on the temperature, i.e. for avoiding any pseudoelastic property. According to the standard characterization of shape memory alloys, this test was carried out by means of DSC (differential scanning calorimetry). With this technique it is possible to measure the heat exchanged by a sample with the surrounding environment during a complete thermal cycle. Figure 5(a) represents the calorimetric curve of a sample taken from an NiTi wire processed according to the present invention. It is evident that no martensitic transformation takes place, as there is no transformation peak either in the part of the curve relating to the cooling phase or in the part of the curve relating to the heating phase. As a comparison, figure 5(b) indicates the calorimetric curve of a completely annealed sample taken from the same material. In this case, as expected, there is clear evidence of transformation peaks and the Ms, Mf, As and Af temperatures can be easily identified.

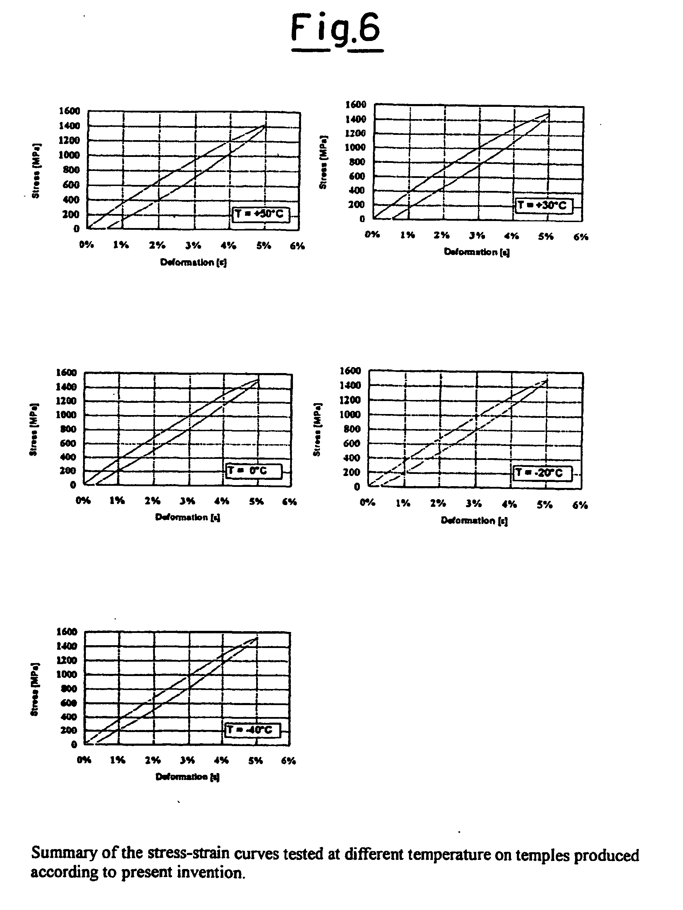

Some linear samples of NiTi wires processed according to the present invention were subsequently subjected to tensile stress in an electro-mechanical test machine equipped with a thermal chamber in order to test the mechanical properties at different temperatures. The tests were effected at -40°C, -20°C, 0°C, 30°C and 50°C. Figure 6 summarizes the results obtained. The superelastic behaviour of the NiTi wire can be clearly observed at all the temperatures tested. There is no evidence of a constant pseudoelastic plateau and in each case the recovery of the initial shape is almost complete.

This therefore demonstrates that the alloy processed according to the present invention satisfies the basic requisites. A process has been described which enables economic frames for glasses and/or parts thereof to be quite simply produced. This processing allows the structure of microstructural defects induced in the material by a conventional processing method, to be rearranged.

By means of this processing technique it is possible to obtain an increase in the ultimate elongation value of NiTi wires and a decrease in the Young modulus. This is very useful in the production of frames for glasses and/or parts thereof.

As previously specified, the frames for glasses and/or parts thereof produced with this material have other advantages such as comfort for the wearer, post-production workability, sufficient rigidity and a good resistance to accidental bending. They provide more comfort for the user as the increased rigidity (see Figure 4(b)) allows finer and therefore lighter frames to be produced with respect to a standard pseudoelastic material. There is excellent workability after production as for example, when necessary, the temple can be gently bent to exceed the superelastic limit and conserve the additional plastic deformation. In this way, the frames can be adapted to the face and once modified, they still maintain their previous elastic properties.

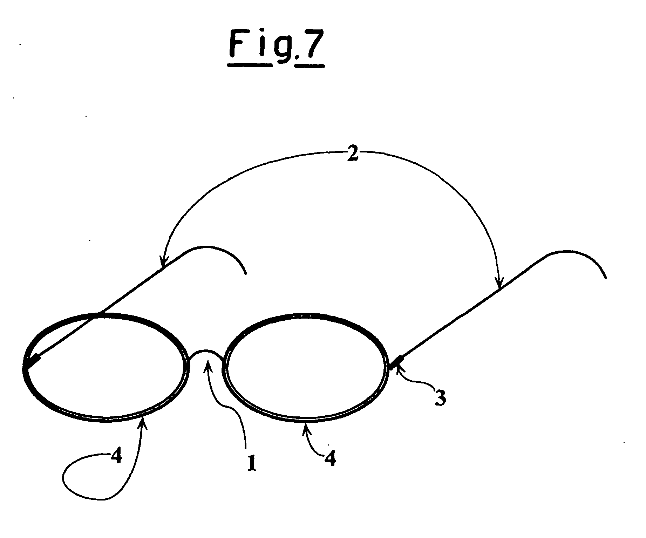

Figure 7 shows parts of the frames for glasses which can be produced using the material supplied by the present invention. The frames for glasses comprises lens framework (4), bridge (1), hinges (3) and temples (2).

There are obviously processing protocols for preparing parts of frames for glasses such as the bridge or temples, using the material according to the present invention. A typical example is provided hereunder.

After stretching a wire to the desired diameter, care being taken that this operation is interrupted when a total strain hardening of about 30% has been reached, the wire is bent several times in different directions by passing it through a special machine. When a perfectly straight wire has been obtained, it can be cold formed into its end-shape, for example, by forcing it into a mould. Samples of the processed wire, tested by means of DSC, must not show any transformation peak. The tensile deformation measurement of the processed wire or component must not show any dependency on the mechanical properties or temperature and no pseudoelastic plateau should be present.

## Claims

1. A method for preparing frames for glasses having one or more components, or portions thereof, made of a NiTi-based shape memory alloy, the nickel content in the alloy varying from 49 to 52 atomic % and the titanium content in the alloy varying from 48 to 51 atomic %, **characterised in that** said method comprises the following steps of:
a) strain hardening the alloy by drawing with a residual strain hardening of not less than 30%,
b) subsequently further strain hardening said alloy to a value of at least 40% by means of cold rolling, forging with a rotary swager or bending;
c) cold forming said components, or portions thereof into their end-shape by means of further plastic deformation, said components or portions thereof having an elasticity of over 2% within a temperature range varying of from -40°C to 50°C.

2. A method for preparing frames for glasses having one or more components, or portions thereof, made of a NiTi-based shape memory alloy, the nickel content in the alloy varying from 49 to 52 atomic %, the NiTi-based alloy being a ternary modification of NiTi such as NiTiX wherein X is equal to Cu, Fe, Nb, V, Mo, Co, Ta, Cr and Mn, X varying from 1 to 25 atomic percent, **characterised in that** said method comprises the following steps of:
a) strain hardening the alloy by drawing with a residual strain hardening of not less than 30%,
b) subsequently further strain hardening said alloy to a value of at least 40% by means of cold rolling, forging with a rotary swager or bending;
c) cold forming said components, or portions thereof into their end-shape by means of further plastic deformation, said components or portions thereof having an elasticity of over 2% within a temperature range varying of from -40°C to 50°C.

3. The method according to claim 2, **characterized in that** X is equal to Cu, Fe and Nb.

## Patentansprüche

1. Verfahren zum Herstellen von Brillenfassungen mit einer oder mehreren Komponenten oder von Teilen davon aus einer NiTi-basierten Formerinnerungslegierung, wobei der Nickelanteil in der Legierung zwischen 49 und 52 Atom-% und der Titananteil in der Legierung zwischen 48 und 51 Atom-% liegt, **dadurch gekennzeichnet, daß** in dem Verfahren
(a) die Legierung kaltgehärtet wird, indem sie mit einer Restkalthärtung von mindestens 30% tiefgezogen wird,
(b) die Legierung anschließend bis zu einem Wert von wenigstens 40% durch Kaltwalzen, Dreh-Gesenkschmieden oder Biegeumformen weiter kaltgehärtet wird,
(c) die Komponenten oder deren Teile durch weitere plastische Umformung in ihre Endform kaltumgeformt werden, wobei die Komponenten oder deren Teile eine Elastizität von über 2% innerhalb eines zwischen -40°C und 50°C variierenden Temperaturbereichs aufweisen.

2. Verfahren zum Herstellen von Brillenfassungen mit einer oder mehreren Komponenten oder von Teilen davon aus einer NiTi-basierten Formerinnerungslegierung, wobei der Nickelanteil in der Legierung zwischen 49 und 52 Atom-% liegt, und die NiTi-basierte Legierung eine ternäre Modifikation von NiTi, wie zum Beispiel NiTiX darstellt, in der X Cu, Fe, Nb, V, Mo, Co, Ta, Cr oder Mn entspricht und zwischen 1 und 25 Atom-% liegt, **dadurch gekennzeichnet, daß** in dem Verfahren
(a) die Legierung kaltgehärtet wird, indem sie mit einer Restkalthärtung von mindestens 30% tiefgezogen wird,
(b) die Legierung anschließend bis zu einem Wert von wenigstens 40% durch Kaltwalzen, Dreh-Gesenkschmieden oder Biegeumformen weiter kaltgehärtet wird,
(c) die Komponenten oder deren Teile durch weitere plastische Umformung in ihre Endform kaltumgeformt werden, wobei die Komponenten oder deren Teile eine Elastizität von über 2% innerhalb eines von -40°C bis 50°C variierenden Temperaturbereichs aufweisen.

3. Verfahren nach Anspruch 2, **dadurch gekennzeichnet, daß** X Cu, Fe und Nb entspricht.

## Revendications

1. Procédé de fabrication de montures de lunettes ayant un ou plusieurs composants, ou parties de celles-ci, fabriquées en un alliage à mémoire de forme à base de NiTi, la teneur en nickel dans l'alliage variant de 49 à 52 % atomiques et la teneur en titane dans l'alliage variant de 48 à 51 % atomiques, **caractérisé en ce que** ledit procédé comprend les étapes suivantes consistant à:
a) durcir à froid l'alliage par étirement avec un durcissement à froid résiduel qui n'est pas inférieur à 30 %,
b) par la suite, durcir à froid davantage ledit alliage à une valeur d'au moins 40 % par laminage à froid, forgeage avec une étampe rotative ou pliage ;
c) former à froid lesdits composants ou parties de ceux-ci en leur forme finale au moyen d'une autre déformation plastique, lesdits composants ou parties de ceux-ci présentant une élasticité supérieure à 2 % dans une plage de température variant de -40 à +50 °C.

2. Procédé de fabrication de montures de lunettes ayant un ou plusieurs composants ou parties de celles-ci, fabriquées en un alliage à mémoire de forme à base de NiTi, la teneur en nickel dans l'alliage variant de 49 à 52 % atomiques, l'alliage à base de NiTi étant une modification ternaire du NiTi telle qu'un NiTiX, dans lequel X est égal à Cu, Fe, Nb, V, Mo, Co, Ta, Cr et Mn, X variant de 1 à 25 % atomiques, **caractérisé en ce que** ledit procédé comprend les étapes suivantes consistant à :
a) durcir à froid l'alliage par étirement avec un durcissement à froid résiduel qui n'est pas inférieur à 30 %,
b) par la suite, durcir à froid davantage ledit alliage à une valeur d'au moins 40 % par laminage à froid, forgeage avec une étampe rotative ou pliage ;
c) former à froid lesdits composants ou parties de ceux-ci en leur forme finale au moyen d'une autre déformation plastique, lesdits composants ou parties de ceux-ci présentant une élasticité supérieure à 2 % dans une plage de température variant de -40 à +50 °C.

3. Procédé selon la revendication 2, **caractérisé en ce que** X est égal à Cu, Fe et Nb.
